# EUROPÄISCHE PATENTSCHRIFT

(11) **EP 0 437 573 B1**
(45) Veröffentlichungstag und Bekanntmachung des Hinweises auf die Patenterteilung: **24.11.1993**
(21) Anmeldenummer: 90911726.9
(22) Anmeldetag: 03.08.1990
(51) Int. Cl.: B23K 9/10, B23K 9/20

(54) **BOLZENSCHWEISSGERÄT MIT MEHREREN SCHWEISSAUSGÄNGEN FÜR SCHWEISSPITOLEN MIT VERSCHIEDENER POLARITÄT FÜR UNTERSCHIEDLICHE SCHWEISSAUFGABEN**
STUD WELDING MACHINE WITH A PLURALITY OF WELDING OUTPUTS FOR WELDING GUNS OF DIFFERENT POLARITY FOR VARIOUS WELDING OPERATIONS
APPAREIL A SOUDER DES GOUJONS AYANT PLUSIEURS SORTIES DE SOUDAGE POUR PISTOLETS A SOUDER AVEC POLARITE VARIABLE POUR TACHES DE SOUDAGE VARIEES

(30) Priorität: 07.08.1989 DE 3926074
(43) Veröffentlichungstag der Anmeldung: 24.07.1991
(73) Patentinhaber: TRW NELSON BOLZENSCHWEISSTECHNIK GMBH & CO. KG, D-58285 Gevelsberg (DE)
(72) Erfinder: SCHWIETE, Bernd, D-5810 Witten 7 (DE)
(74) Vertreter: Schieschke, Klaus, Dipl.-Ing.
(86) Internationale Anmeldenummer: DE9000599
(87) Internationale Veröffentlichungsnummer: WO9101843

(56) Entgegenhaltungen:
- AT-B- 367 336
- DE-A- 1 952 467
- US-A- 3 475 585

## Beschreibung

Die Erfindung betrifft ein Bolzenschweißgerät mit mehreren Schweißausgängen für Schweißpistolen mit verschiedener Polarität für unterschiedliche Schweißaufgaben nach dem Oberbegriff des Patentanspruchs 1.

Es ist ein Bolzenschweißgerät bekannt, bei dem mehrere Schweißausgänge, z.B. vier, vorhanden sind, die keine unterschiedliche Polarität besitzen. Nachteilig ist hierbei, daß ein Umstecken der Schweißkabel notwendig ist. Solche Steuergeräte sind nicht optimal für die Anwendung in Verbindung mit von Robotern betätigten Schweißpistolen oder solchen in Transferstraßen geeignet.

Des weiteren ist in der AT-A-367 336 eine Gleichspannungs-Schaltanordnung mit einer Umpoleinrichtung für zwei gesteuerte Schweißgleichrichter bekannt, bei der die Umpolung des einzigen Schweißausgangs durch die wechselweise Aktivierung bzw. Desaktivierung des einen oder anderen mittels steuerbarer elektronischer Schalter aufgebauten Schweißgleichrichters erreicht wird.

Die Übertragung dieses vornehmlich für Schweißverfahren mit längerer Brenndauer des Schweißlichtbogens gedachten Systems auf ein Bolzenschweißgerät mit mehreren Schweißausgängen, bei dem der Schweißlichtbogen nur für sehr kurze Zeit benötigt wird, ist jedoch aufgrund des hohen Aufwands nicht sinnvoll.

Der Erfindung liegt die daher Aufgabe zugrunde, ein Steuergerät zu schaffen, das es ermöglicht, die Polarität der Schweißausgänge den jeweils sich stellenden Schweißaufgaben anzupassen und das gleichzeitig mit geringem Aufwand herstellbar ist.

Die Erfindung löst diese Aufgabe mit den Merkmalen des Patentanspruchs 1.

Dadurch, daß die Polarität aller eines Schweißausgänge umpolbar ist, kann vom Steuergerät her ohne Umstecken der Schweißkabel eine Anpassung an unterschiedliche Schweißaufgaben erfolgen. Insbesondere dann, wenn diese Umpolbarkeit der Schweißausgänge steuerbar ist, z.B. durch ein Programm oder fernbedient, ist ein solches Bolzenschweißgerät vorzüglich zum Einsatz in Verbindung mit Roboter-betätigten Bolzenschweißpistolen oder in Transferstraßen geeignet.

Weitere Ausgestaltungen der Erfindung ergeben sich aus den Unteransprüchen.

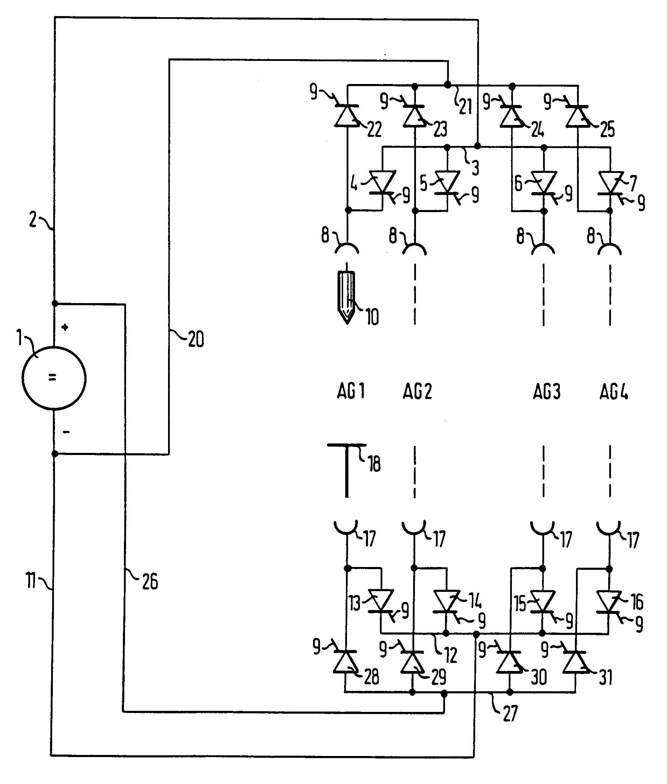

Die Zeichnung zeigt ein Schaltschema eines Bolzenschweißgerätes nach der Erfindung.

Das Bolzenschweißgerät weist eine Gleichstromquelle 1 auf, deren Pluspol über die Leitung 2 mit einem Leiter 3 verbunden ist. An diesen sind z.B. vier Thyristoren 4, 5, 6 und 7 mit ihren Enden angeschlossen. Die Kathodenanschlüsse dieser Thyristoren sind mit Steckanschlüssen 8 der Schweißausgänge AG1, AG2, AG3 und AG4 verbunden. Diese Schweißausgänge sind üblicherweise von speziellen Steckdosen gebildet. Werden die Steuerelektroden 9 über nicht dargestellte Schalter, die von Hand bedienbar am Steuergerät oder zur Fernbedienung an der Schweißpistole vorgesehen sind an Spannung gelegt, werden die Thyristoren in den Durchlaßzustand überführt. Dadurch erhalten die Steckanschlüsse 8 positives Potential.

Wie beim Schweißausgang AC1 dargestellt, ist hierbei die Schweißpistole so angeschlossen, daß der zu verschweißende Bolzen 10 für eine bestimmte Schweißaufgabe positives Potential aufweist.

Der Minuspol der Gleichstromquelle 1 ist über eine Leitung 11 an einen Leiter 12 angeschlossen. An diesen Leiter 12 sind die Kathoden der Thyristoren 13, 14, 15 und 16 angeschlossen. Die Anoden dieser Thyristoren sind mit Steckanschlüssen 17 der Schweißausgänge AG1, AG2, AG3 und AG4 verbunden. An den Steckanschluß 17 des Schweißausganges AG1 ist das Werkstück 18 angeschlossen, an das der Bolzen 10 stumpf aufzuschweißen ist. Dieses Werkstück 18 ist wie üblich an Masse gelegt.

Vorzugsweise ist das Bolzenschweißgerät so ausgeführt, daß alle vier Schweißausgänge nur zeitlich nacheinander benutzbar sind.

Hierzu ist eine nicht näher dargestellte Steuerung eingebaut, die jeweils nur den Schweißausgang zuschaltet, dessen Schweißpistole als erster den Stromkreis zur Schweißstromquelle herstellt.

Weiterhin ist der Minuspol der Gleichstromquelle 1 über eine Leitung 20 mit einem Leiter 21 verbunden. An diesen Leiter 21 sind Thyristoren 20, 23, 24 und 25 mit ihren Kathoden angeschlossen. Die Anoden dieser Thyristoren sind mit den Steckanschlüssen 8 verbunden. Ihre Steuerelektroden 9 sind wiederum wie diejenigen der Thyristoren 4, 5, 6 und 7 ansteuerbar.

Weiterhin ist der Pluspol der Gleichstromquelle 1 über eine Leitung 26 an einen Leiter 27 angeschlossen. Mit diesem sind die Anoden der Thyristoren 28, 29, 30 und 31 verbunden. Die Kathoden sind an die Steckanschlüsse 17 angeschlossen.

Auch hier sind die Steuerelektroden 9 in gleicher Weise wie diejenigen der anderen Thyristoren mit entsprechenden Schaltern am Steuergerät bzw. an der Schweißpistole verbunden.

Durch diese beschriebene Schaltung kann, je nach dem welche Thyristoren in den Durchlaßzustand geschaltet werden, jeder der Schweißanschlüsse AG1, AG2, AG3 und AG4 mit ihren Steckanschlüssen 8 und 17 so gepolt werden, daß einmal der Steckanschluß 8 positiv, der Steckanschluß 17 negativ oder der Steckanschluß 8 negativ und der Steckanschluß 17 positiv gepolt ist.

Die Schweißausgänge AG1 bis AG4 können so wechselweise von Fall zu Fall den jeweiligen Schweißaufgaben entsprechend gepolt werden. Solche Anforderungen stellen sich insbesondere dann, wenn ein solches Steuergerät für Roboterschweißungen oder in Transferstraßen eingesetzt wird. Dabei kann die Zuschaltung der Thyristoren auch über vorprogrammierte Betätigungselemente erfolgen.

## Patentansprüche

1. Bolzenschweißgerät mit mehreren Schweißausgängen zum An- schluß jeweils einer Schweißpistole, welches eine einzige Gleichspannungsquelle für den Schweißvorgang aufweist, dadurch gekennzeichnet, daß wenigstens ein Schweißausgang (AG1, AG2, AG3, AG4) umpolbar mit der einzigen Gleichspannungsquelle (1) mittels steuerbarer elektronischer Schalter (4 bis 7, 13 bis 16, 22 bis 25, 28 bis 31) verbunden ist.

2. Bolzenschweißgerät nach Anspruch 1, dadurch gekennzeichnet, daß jeweils beide Anschlüsse eines oder mehrerer Schweißausgänge (AG1, AG2, AG3, AG4) mittels der steuerbaren elektronischen Schalter (4 bis 7, 13 bis 16, 22 bis 25, 28 bis 31) mit beiden Polen der Gleichspannungsquelle (1) verbunden sind.

3. Bolzenschweißgerät nach Anspruch 1 oder 2, dadurch gekennzeichnet, daß die steuerbaren elektronischen Schalter (4 bis 7, 13 bis 16, 22 bis 25, 28 bis 31) derart angesteuert sind, daß alle Schweißausgänge (AG1, AG2, AG3, AG4) unabhängig voneinander oder jeweils eine oder mehrere Gruppen von Schweißausgängen gleichzeitig in ihrer Polarität umschaltbar sind.

4. Bolzenschweißgerät nach einem der vorhergehenden Ansprüche, dadurch gekennzeichnet, daß die steuerbaren elektronischen Schalter (4 bis 7, 13 bis 16, 22 bis 25, 28 bis 31) als Thyristoren ausgebildet sind.

5. Bolzenschweißgerät nach einem der vorhergehenden Ansprüche, dadurch gekennzeichnet, daß der die steuerbaren elektronischen Schalter durch einen oder mehrere am Bolzenschweißgerät angeordnete, von Hand betätigbaren Schalter oder ferngesteuert von der Schweißpistole aus in den geschlossenen oder offenen Zustand schaltbar sind.

6. Bolzenschweißgerät nach einem der vorhergehenden Ansprüche, dadurch gekennzeichnet, daß die steuerbaren elektronischen Schalter durch eine mit dem Bolzenschweißgerät verbundene elektronische Steuereinheit in den geschlossenen oder offenen Zustand schaltbar sind.

## Claims

1. Bolt-welding apparatus having a plurality of welding outputs for connection of in each case one welding pistol which has a single DC voltage source for the welding process, characterized in that at least one welding output (AG1, AG2, AG3, AG4) is connected with reversible polarity to the single DC voltage source (1) by means of controllable electronic switches (4 to 7, 13 to 16, 22 to 25, 28 to 31).

2. Bolt-welding apparatus according to Claim 1, characterized in that in each case both connections of one or more welding outputs (AG1, AG2, AG3, AG4) are connected to both poles of the DC voltage source (1) by means of the controllable electronic switches (4 to 7, 13 to 16, 22 to 25, 28 to 31).

3. Bolt-welding apparatus according to Claim 1 or 2, characterized in that the controllable electronic switches (4 to 7, 13 to 16, 22 to 25, 28 to 31) are driven in such a manner that the polarities of all the welding outputs (AG1, AG2, AG3, AG4) can be reversed independently of one another, or the polarities of in each case one or more groups of welding outputs can be reversed, simultaneously.

4. Bolt-welding apparatus according to one of the preceding claims, characterized in that the controllable electronic switches (4 to 7, 13 to 16, 22 to 25, 28 to 31) are constructed as thyristors.

5. Bolt-welding apparatus according to one of the preceding claims, characterized in that the controllable electronic switches can be switched into the closed or open state by means of one or more switches which are arranged on the bolt-welding apparatus and can be operated by hand, or can be switched by remote control from the welding pistol.

6. Bolt-welding apparatus according to one of the preceding claims, characterized in that the controllable electronic switches can be switched into the closed or open state by means of an electronic control unit which is connected to the bolt-welding apparatus.

## Revendications

1. Appareil à souder des goujons comprenant plusieurs sorties de soudage destinées chacune au raccordement d'un pistolet à souder, qui comprend une unique source de tension continue pour l'opération de soudage, caractérisé en ce qu'au moins une sortie de soudage (AG1, AG2, AG3, AG4) est reliée de façon à pouvoir en inverser la polarité à l'unique source de tension continue (1) au moyen de commutateurs électroniques commandables (4 à 7, 13 à 16, 22 à 25, 28 à 31).

2. Appareil à souder des goujons selon la revendication 1, caractérisé en ce que deux raccords respectifs d'une ou plusieurs sorties de soudage (AG1, AG2, AG3, AG4) sont raccordés au moyen des commutateurs électroniques commandables (4 à 7, 13 à 16, 22 à 25, 28 à 31) aux deux pôles de la source de tension continue (1).

3. Appareil à souder des goujons selon la revendication 1 ou 2, caractérisé en ce que les commutateurs électroniques commandables (4 à 7, 13 à 16, 22 à 25, 28 à 31) sont commandés de manière que puissent être inversées dans leur polarité toutes les sorties de soudage (AG1, AG2, AG3, AG4) indépendamment les unes des autres ou respectivement un ou plusieurs groupes de sortie de soudage simultanément.

4. Appareil à souder des goujons selon l'une quelconque des revendications précédentes, caractérisé en ce que les commutateurs électroniques commandables (4 à 7, 13 à 16, 22 à 25, 28 à 31) sont constitués sous forme de thyristors.

5. Appareil à souder des goujons selon l'une quelconque des revendications précédentes, caractérisé en ce que les commutateurs électroniques commandables peuvent être commutés vers leur position fermée ou ouverte par un ou plusieurs commutateurs montés sur l'appareil de soudage et actionnés à la main ou commandés à distance à partir du pistolet à souder.

6. Appareil à souder des goujons selon l'une quelconque des revendications précédentes, caractérisé en ce que les commutateurs électroniques commandables peuvent être commutés vers l'état fermé ou ouvert par une unité de commande électronique reliée à l'appareil à souder des goujons.
